# EUROPEAN PATENT APPLICATION

(11) **EP 1 466 760 A1**
(43) Date of publication of application: **13.10.2004**
(21) Application number: 04101192.5
(22) Date of filing: 23.03.2004
(51) Int. Cl.: B60C 17/06, B60C 17/04

(54) **Tire support ring reinforcement**

(30) Priority: 31.03.2003 US 403689
(71) Applicant: THE GOODYEAR TIRE & RUBBER COMPANY, Akron, Ohio 44316-0001 (US)
(72) Inventor: White, John Richard, Wadsworth, OH 44281 (US); Aube, Michael Albert, Uniontown, OH 44685 (US)
(74) Representative: Kutsch, Bernd

(57) **Abstract**

A support ring (10) is intended for mounting on a wheel rim (12) inside a tire (16), in order to support the tire (16) in the event of a loss of inflation pressure. The support ring (10) has a base (34) intended to fit around the wheel rim (12), a cap (36), and an annular body (38) joining the base (34) and the cap (36) together. Within the base (36) of the ring (10), to control the expansion characteristics of the support ring (10), is a metal support (40). The metal support (40) has a mesh configuration.

## Description

### Field of the Invention

The present invention is directed to a support ring for tires that operate in reduced air pressure conditions. More specifically, the support ring is provided with a metal mesh or a metal support located at the radially inner base of the ring.

### Background of the Invention

Tires are primarily supported by internal air pressure. A number of tire designs now exist that use a support ring located inside the tire to support the tire when the tire is operated in an underinflated condition. The use of a support ring of annular shape made of a flexible elastomeric material has been known for a long time. To improve the endurance performance of the support, a lubricant is generally included inside the tire cavity in order to lubricate any contact there may be between the outer surface of the ring and the inside of the tire.

Internal support rings are disclosed in US-A- 4,248,286, 5,891,279, 6,463,972, and US Patent Application Publications US 2002/0157752 and US 2003/0005991. The rings are formed from either elastomeric or thermoplastic materials. The material selection is based upon the anticipated load the ring will be supporting.

An advantage of using thermoplastic material in forming the ring is the relatively lighter weight material and the flexibility of the material. However, because of the flexibility of the material, when the ring is formed from thermoplastics, the ring is subject to expansion due to centrifugal forces encountered while driving at high speeds. Similar expansion of the ring is also experienced when the ring is formed from elastomeric material. The present invention is directed at overcoming and eliminating this problem.

### Summary of the Invention

The inventive support ring is intended to be mounted on a wheel rim inside a tire, in order to support the tread strip of the tire in the event of reduced inflation pressure or a loss of inflation pressure. The support has a contoured base intended to fit snugly around the wheel rim contour and substantially cylindrical cap. In accordance with the invention, the base of the support ring is provided with a metal support.

Preferably, the metal support has a mesh configuration, i.e., an open network configuration. The spaces forming the mesh may have a constant size and spacing but may vary in size and spacing either laterally or circumferentially along the inner surface of the support ring.

The support ring may be formed from any suitable material which can support the under-inflated tire during operation and which will remain viable for at least a distance which will enable the vehicle operator to have the tire examined, and fixed or repaired. The material may be elastomeric, thermoplastic, or thermoset.

The metal support may be formed of steel, aluminum, or other metallic material that will provide the desired tensile strength.

The metal support is spaced from the radially innermost surface of the ring preferably by a distance of 0.10 to 10.0 mm.

### Brief Description of the Drawings

The invention will be described by way of example and with reference to the accompanying drawings in which:
FIG. 1 is a cross sectional view of a run flat tire system;
FIG. 2 is a support ring in accordance with the invention; and

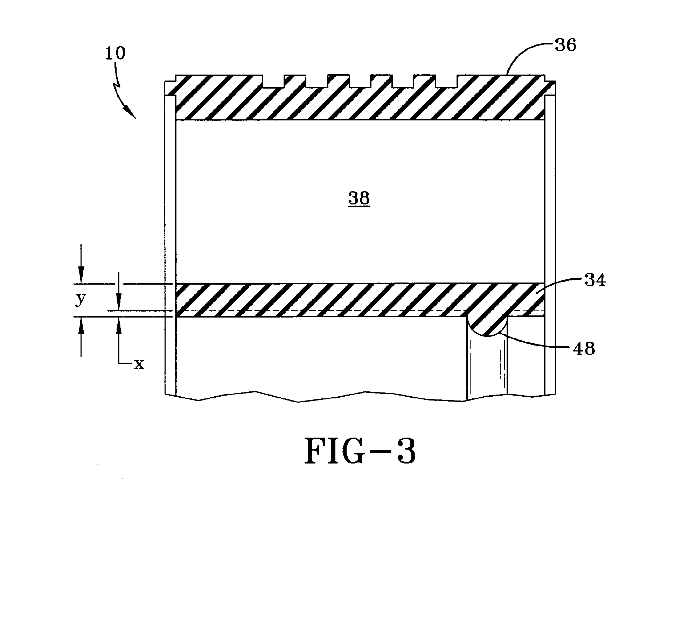

FIG. 3 is a cross sectional view of the support ring.

### Detailed Description of the Invention

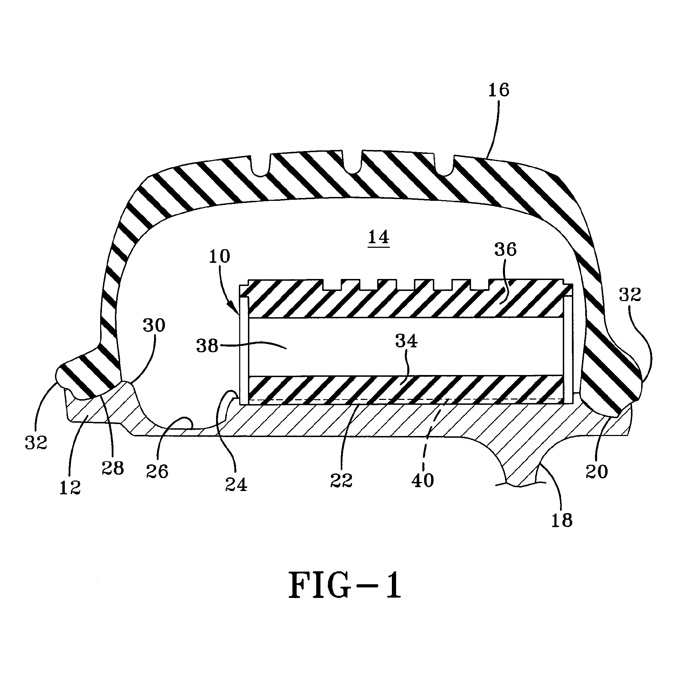

FIG. 1 illustrates a support ring 10 according to the invention mounted around a preferential wheel rim 12 and inside the cavity 14 of a corresponding tire 16. The support ring 10 is illustrated as being mounted inside of an asymmetrical tire 16 on an asymmetrical wheel rim 12. However, for the purpose of this invention, the tire and wheel construction may vary from that illustrated to other types of tire and wheel construction and the present invention is not limited to the illustrated tire 16 and wheel 12.

The wheel rim 12 is a one-piece wheel. The wheel rim 12 comprises axially, starting from the same side as the wheel disk 18, namely from the side intended to be on the outboard side of the vehicle: a first seat 20, a flat cylindrical region 22 intended to receive the support ring 10, the diameter of this region 22 is greater than that of the seat 20 to allow the support ring to be mounted easily and directly by slipping it on axially, a stop 24 for the transverse immobilization of the support ring 10, a mounting well 26, this well 26 is of minimized size by comparison with conventional mounting wells, a second seat 28 preceded by a retaining hump 30, the diameter of this second seat is greater than the diameter of the region 22. One feature of this wheel rim is that the two seats 20, 28 are angled in the opposite direction to the seats of conventional wheel rims.

The illustrated tire 16 is an asymmetric tire and has two beads 32 of differing diameters. The tire may be provided with a lenticular shaped inserts in the tire sidewalls to aid in supporting the tire during under inflated operating conditions. Such inserts, and other similar inserts, are well known in the art.

The support ring 10 has three main parts: a base 34 of annular overall shape, a substantially annular cap 36 with grooves in accordance with the present invention, and an annular body 38 for joining the base 34 and the cap 36 together. The annular body 38 may have any configuration desired to achieve a particular set of design characteristics.

The support ring 10 is formed from elastomeric, thermoplastic, or thermoset materials. If the support ring 10 is formed of elastomeric material, such as natural rubber, the elastomer should have a Shore A hardness of 60 to 90. If the support ring 10 is formed of a material such as polyurethane, polyester elastomers, or nylon, than the material should have a Shore D hardness of 30 to 45.

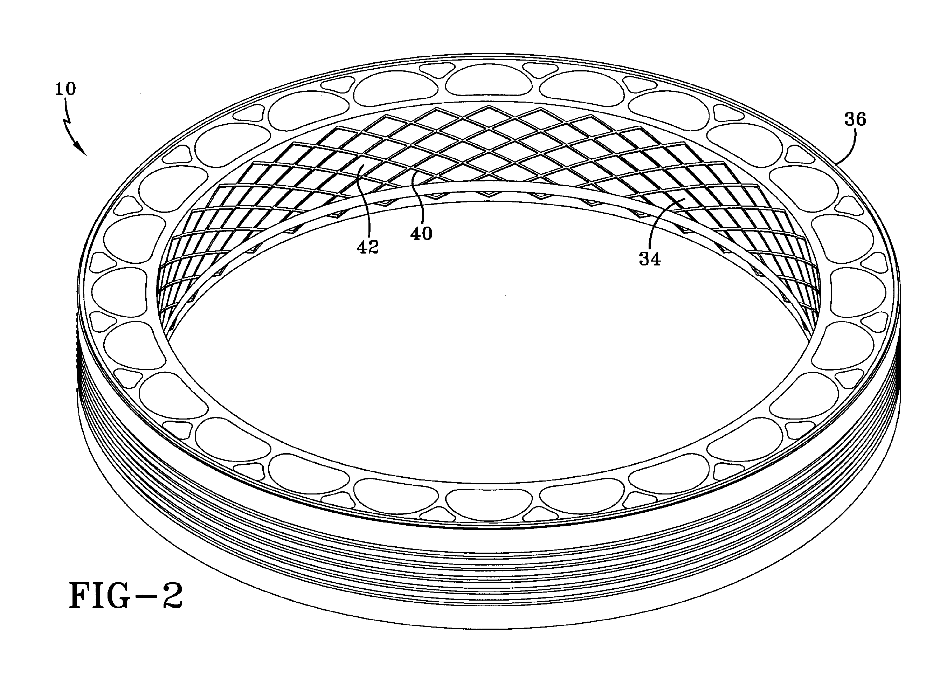

Within the base 34 of the ring 10, in accordance with the invention, is a metal support 40. The metal support 40 is configured as a mesh, see Fig. 2. The mesh is defined as a network of spaced openings 42. The openings 42 are illustrated as being equally spaced and of equal size; however, depending upon the ring configuration, the openings 42 may vary in size or spacing either circumferentially along the length of the ring 10 or laterally across the width of the ring 10.

The mesh configuration provides flexibility to the metal support 40. A small degree of flexibility is necessary for removing the ring 10 from the mold after formation and for mounting the ring 10. The metal forming the support 40 provides strength and a necessary degree of rigidity to prevent excessive expansion of the ring 10 during operation.

The openings 42 of the mesh allow the material forming the ring 10 to penetrate through the metal support 40 and encase it within the ring base 34. The metal support 40 is located substantially near the innermost surface of the ring 10, and is distanced from the innermost surface by a distance x. The distance x is in the range of 0.10 to 10 mm, but in no circumstance is the distance x greater than the thickness y of the base. Preferably, the distance x is the range of 5 to 75% of the thickness y, more preferably in the range of 5 to 45% of the thickness y.

The support 40 may be formed as a unitary circle or may be welded into a circular configuration after forming of the mesh.

As noted, the presence of the metal mesh prevents expansion of the ring 10 due to centrifugal forces.

## Claims

1. A support ring (10) intended to be mounted on a wheel rim (12) inside a tire (16), comprising a base (34) intended to fit around the wheel rim (12), a cap (36), and an annular body (38) joining the base (34) and the cap (36) together, wherein the ring (10) is **characterized by** the base (34) being reinforced with a metal mesh (40) or a metal support.

2. The support ring of claim 1, wherein the metal mesh (40) or the metal support is formed of steel or aluminum.

3. The support ring of claim 1 or 2 wherein the metal mesh (40) has spaces (42) that vary in size across the lateral width of the support ring (10).

4. The support ring of at least one of the preceding claims, wherein the metal mesh (40) has spaces (42) that vary in size along the circumferential length of the ring (10).

5. The support ring of at least one of the preceding claims, wherein the metal mesh (40) or the metal support is spaced from the radially innermost surface of the ring (10) by a distance of 0.10 to 10.0 mm.

6. The support ring of at least one of the preceding claims, wherein the support ring (10) is formed from either a thermoplastic or thermoelastic material.

7. The support ring of claim 1, wherein the metal support has a mesh configuration.
